# EUROPÄISCHE PATENTSCHRIFT

(11) **EP 1 598 563 B1**
(45) Veröffentlichungstag und Bekanntmachung des Hinweises auf die Patenterteilung: **17.01.2007**
(21) Anmeldenummer: 04011750.9
(22) Anmeldetag: 18.05.2004
(51) Int. Cl.: F16B 7/18

(54) **Verbindersystem**
Connector system
Système de connexion

(43) Veröffentlichungstag der Anmeldung: 23.11.2005
(73) Patentinhaber: Band, Richard, D-91183 Abenberg (DE); Band, Franz, 90559 Burgthann (DE)
(72) Erfinder: Band, Richard, D-91183 Abenberg (DE); Band, Franz, 90559 Burgthann (DE)
(74) Vertreter: Zech, Stefan Markus

(56) Entgegenhaltungen:
- DE-A- 10 200 964
- DE-A- 19 534 034
- DE-C- 4 016 320

## Beschreibung

Die Erfindung betrifft ein Verbindersystem ausgebildet und bestimmt für eine Profilverbindung umfassend zwei zu verbindende Profilstäbe aus Metall, insbesondere aus Aluminium, die jeweils mindestens eine längsverlaufende hinterschnittene Profilnut aufweisen, wobei das Verbindersystem eine Verbindungsschraube mit einem Schraubenkopf und einem Schraubenschaft sowie eine Gewindehülse umfasst, wobei die Verbindungsschraube derart bemessen ist, dass sie die Gewindehülse durchtritt und mit einem Teil ihres Schraubenschaftes über diese zum Eingriff in ein Gegenlagerstück in der Profilnut des zweiten Profilstabes gebracht werden kann.

Derartige Verbindersysteme sind aus dem Stand der Technik bekannt. Die Montage herkömmlicher Verbindersysteme in der Profilnut eines Profilstabs erfolgt dabei herkömmlicherweise wie folgt: Die Gewindehülse wird in die Profilnut eingeschraubt, wobei allerdings vor Einschrauben der Gewindehülse die Verbindungsschraube in die Profilnut in der richtigen Orientierung einzuführen ist. Nach dem Eindrehen der Gewindehülse muss die Verbindungsschraube durch die Gewindehülse hindurchgeführt werden. Dabei muss die Verbindungsschraube so ausgemittelt werden, dass sie die Innenbohrung der Gewindehülse genau trifft ohne auf dem Lagerbund der Gewindehülse zu stoßen. Ist die Verbindungsschraube einmal korrekt eingeführt und wird sie wegen anderer Montagearbeiten nicht gleich mit einem Gegenlagerstück in der Profilnut des zweiten Profilstabes in Eingriff gebracht, besteht darüber hinaus das Risiko, dass die Verbindungsschraube erneut aus der Gewindehülse herausfällt, evtl., sofern die Profilnut des Profilstabes am distalen Ende im Montagevorgang endseitig offen ist sogar aus der Profilnut herausfällt. Dementsprechend kostet der Montagevorgang Zeit und ist relativ kompliziert und aufwendig zu automatisieren.

Die Aufgabe der vorliegenden Erfindung besteht daher darin, die bislang aufwendige Positionierung der Verbindungsschraube in der Profilnut zu vereinfachen bzw. ein ungewolltes Verrutschen der Verbindungsschraube in der Profilnut zu vermeiden.

Diese Aufgabe wird mit einem Verbindersystem nach den Merkmalen des Patentanspruches 1 gelöst. Vorteilhafte Weiterbildungen sind in den Unteransprüchen angegeben.

Ein Kerngedanke der vorliegenden Erfindung besteht dabei darin, ein Verrutschen der Verbindungsschraube durch eine lösbare Fixierung der Verbindungsschraube in der Profilnut zu vermeiden. Während sich bereits zahlreiche Vorteile allein durch den erfindungsgemäßen Gedanken der lösbaren Fixierung der Verbindungsschraube in der Profilnut allgemein ergeben, ist speziell eine lösbare Fixierung der Verbindungsschraube innerhalb der Gewindehülse vorgesehen, so dass Verbindungsschraube und Gewindehülse gemeinsam als Montageeinheit in die Profilnut eingeführt werden können. Hierdurch wird nicht nur eine lösbare Fixierung der Verbindungsschraube in der Profilnut erreicht, sondern der Montagevorgang wird insgesamt erleichtert, da nun nicht mehr in zwei separaten Arbeitsschritten erst die Verbindungsschraube und dann die Gewindehülse eingebracht werden, sondern dies nun in einem einzigen Arbeitsschritt erfolgt. Gleichzeitig kann der Schraubenkopf der Verbindungsschraube beim Einführen der Gewindehülse als Zentriermittel dienen, so dass auch der Einschraubvorgang der Gewindehülse erleichtert wird bzw. ein schräges Einschrauben verhindert wird.

Die beim Einführen der Gewindehülse wirksamen Fixiermittel zwischen Gewindehülse und Verbindungsschraube können vor Eindrehen der Verbindungsschraube in ein Gegenlagerstück in der Profilnut des zweiten Profilstabes gelöst werden.

Zweckmäßigerweise sind die Fixiermittel durch Beaufschlagung des Schraubenkopfes der Verbindungsschraube mit einer vorbestimmten Kraft lösbar. Hierbei kann entweder durch Eingriff eines Werkzeuges in den Schraubenkopf ein vorbestimmtes Drehmoment die Fixiermittel lösen. Alternativ kann auch eine axiale Kraft, vorzugsweise in Verbindungsrichtung, auf den Schraubenkopf ausgeübt werden und so ein Fixiermittel gelöst, insbesondere durchbrochen oder aus der Gewindehülse hinausgeschoben werden. In einer ersten bevorzugten Ausgestaltung umfassen die Fixiermittel ein Klemmstück, vorzugsweise aus Kunststoff.

In einer alternativen Ausgestaltung können die Fixiermittel auch eine klebende und/oder aushärtende, fluide oder pastöse Substanz umfassen, beispielsweise auf der Basis eines Lackes, Silikons oder Klebers.

Wenn der Schraubenkopf eine gewisse axiale Länge aufweist und in seinem Durchmesser auf den Innendurchmesser der Profilnut des Profilstabes abgestimmt ist, was nach einer speziellen Ausgestaltung der vorliegenden Erfindung bevorzugt wird, kann die Verbindungsschraube beim Einschrauben der Verbindungshülse als Führungs- und/oder Zentrierelement dienen. Damit führt die Verbindungsschraube die Gewindehülse exakt parallel in der Profilnut des Profilstabes, so dass ein schräges Eindrehen der Gewindehülse in die Profilnut vermieden wird. Bisher bekannte Gewindehülsen haben am Hülsenkopf einen Zentrierbund, welcher meist relativ kurz bemessen ist, da mit jedem Millimeter Zentrierbundlänge automatisch die für ein Gewinde zur Verfügung stehendes Länge der Gewindehülse verkürzt wird. Mit einem Zentrierbund muss daher immer ein Kompromiss auf Kosten der Einschraubfestigkeit der Gewindehülse eingegangen werden. Eine durch Gewindeschneiden oder Gewindeformen eingebrachte Gewindehülse kann sehr leicht schräg in die Profilnut einlaufen, wenn sie nicht exakt geführt wird. Dieses Risiko besteht besonders dann, wenn die Gewindehülsen von Laien eingedreht werden.

Da nach dem hier beschriebenen vorteilhaften Aspekt der Erfindung die Verbindungsschraube die Führung der Gewindehülse unterstützt, entfällt die gesamte Problematik, so dass auch ein Zentrierbund auf der in Einführrichtung vorne liegenden Seite der Gewindehülse nicht mehr vorgesehen werden braucht. Nach einem Aspekt der vorliegenden Erfindung kann daher auch eine Gewindehülse ohne Zentrierbund eingesetzt werden.
Nach einem weiteren Aspekt der vorliegenden Erfindung wird die Verbindungsschraube in der Gewindehülse über die Fixiermittel so positioniert, dass sie in Einführrichtung in die Profilnut nicht nur mit ihrem Schraubenkopf, sondern auch mit einem Teil ihres Schraubenschaftes vorsteht. Durch den dann längeren Abstand des Schraubenkopfes zur Hülse wird die Führung parallel zur Profilnut beim Eindrehen noch wesentlich verbessert. Eine im Wesentlichen parallele Führung wird aufgrund des vergrößerten Abstands auch dann erreicht, wenn ein gewisses Spiel zwischen dem Außendurchmesser des Schraubenkopfes und dem Innendurchmesser der Profilnut gegeben ist.

Besonders bevorzugt wird eine Ausgestaltung, in der die Verbindungsschraube mindestens über die Hälfte ihrer Länge ihres Schraubenschaftes über die Gewindehülse vorsteht.

Das Klemmstück kann prinzipiell in irgendeiner, für den Anwendungsfall geeigneten Form vorliegen. In einer speziellen, keineswegs jedoch zwingenden Ausgestaltung umfasst das Klemmstück mehrere Klemmlappen, die über einen zentralen Verbindungsabschnitt miteinander verbunden sind.

In einer speziellen Ausgestaltung weisen die Klemmlappen dabei eine Stärke von 0,3 bis 0,5 mm vorzugsweise von etwa 0,4 mm auf.

Nach einem ebenfalls bevorzugten, keineswegs jedoch zwingenden Aspekt der Erfindung ist das Klemmstück einstückig ausgebildet.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert.

Hierbei zeigen:
- Figur 1: eine an sich bekannte Profilverbindung, bei der ein Verbindersystem gemäß der vorliegenden Erfindung Verwendung finden kann
- Figur 2: eine Ausführungsform des Verbindersystems nach der vorliegenden Erfindung zusammen mit einem Nutenstein in einer Explosionsansicht
- Figur 3: das beim Verbindersystem nach Figur 2 verwendete Fixiermittel, aufgeklappt, in Draufsicht
- Figur 4: das Fixiermittel nach Figur 3 in einer Seitenansicht, in Montageposition zusammengefaltet
- Figur 5: eine Schnittansicht durch das Verbindersystem aus Figur 2
- Figur 6: eine schematische Ansicht des bereits teilweise in die Profilnut eines Profilstabes eingeführten Verbindersystems gemäß Figur 5
- Figur 7: das Verbindersystem nach Figur 6 nach Eindringen in die Profilnut

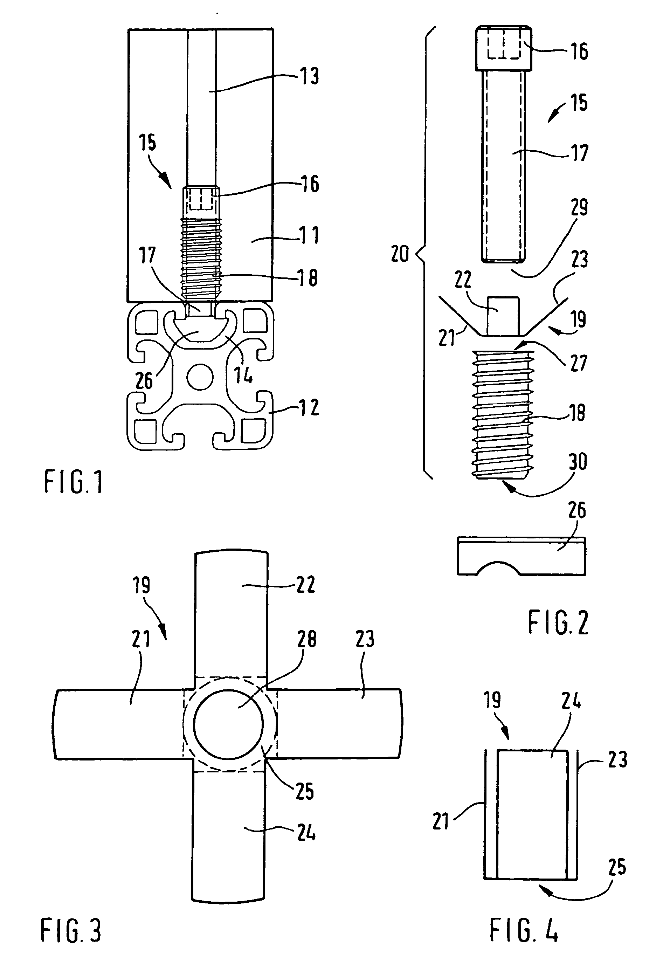

In Figur 1 ist zunächst eine Profilverbindung, bei der das vorliegende Verbindersystem Anwendung finden kann, veranschaulicht. Über das Verbindersystem und ein als Nutenstein 26 ausgebildetes Gegenlagerstück werden zwei Profilstäbe 11, 12 orthogonal zueinander ausgerichtet verschraubt. Die Profilstäbe 11, 12 weisen jeweils mindestens eine hinterschnittene Profilnut 13, 14, hier konkret jeweils vier hinterschnittene Profilnuten auf. In die Profilnut 13, des ersten Profilstabes 11 ist eine Gewindehülse 18 eingeschraubt, die eine Innenbohrung 27 aufweist. Durch diese Innenbohrung 27 ist eine Verbindungsschraube 15 umfassend einen Schraubenkopf 16 und einen Schraubenschaft 17 geführt derart, dass die Gewindehülse 18 die Verbindungsschraube 15 in der Profilnut 13 in Verbindungsrichtung festhält. Die Verbindungsschraube 15 steht mit ihrem Schraubenschaft 17 über die Gewindehülse 18 soweit über, dass sie in die Profilnut 14 des zweiten Profilstabes 12 eintaucht und in einen dort aufgenommenen Nutenstein 26 eingreift. Bei Anziehen der Verbindungsschraube 15 können erster und zweiter Profilstab 11, 12 fest miteinander verschraubt werden.

In Figur 2 ist das Verbindersystem, das beispielsweise für eine Profilsverbindung wie in Figur 1 dargestellt verwendet werden kann, in einer Explosionsansicht veranschaulicht. Das Verbindersystem besteht bei der vorliegenden Ausführungsform konkret aus drei Teilen, nämlich der Verbindungsschraube 15, der Gewindehülse 18 sowie einem Fixiermittel, das hier konkret als einstückiges Klemmstück 19 aus Kunststoff ausgebildet ist. Mittels des Klemmstücks 19 lässt sich die Verbindungsschraube 15 in der Innenbohrung 27 der Gewindehülse 18 lösbar fixieren. Die mittels des Klemmstücks 19 lösbar miteinander verbundenen Einzelelemente, nämlich Verbindungsschraube 15, Klemmstück 19 und Gewindehülse 18 bilden so eine Montageeinheit 20, so dass Verbindungsschraube 15 und Gewindehülse 18 in definierter Relativposition zueinander als Einheit in die Profilnut 13 des Profilstabes 11 eingebracht werden können. Nach Einbringen der Gewindehülse 18 in die Profilnut 13 lässt sich das Klemmstück 19 unter Aufwendung einer vorbestimmten axialen Kraft auf den Schraubenkopf 16 in Verbindungsrichtung aus der Gewindehülse 18 herausdrücken, so dass die Verbindungsschraube 15 dann rotatorisch gegenüber der Gewindehülse 18 frei beweglich ist und mit dem Nutenstein 26 verschraubt werden kann.

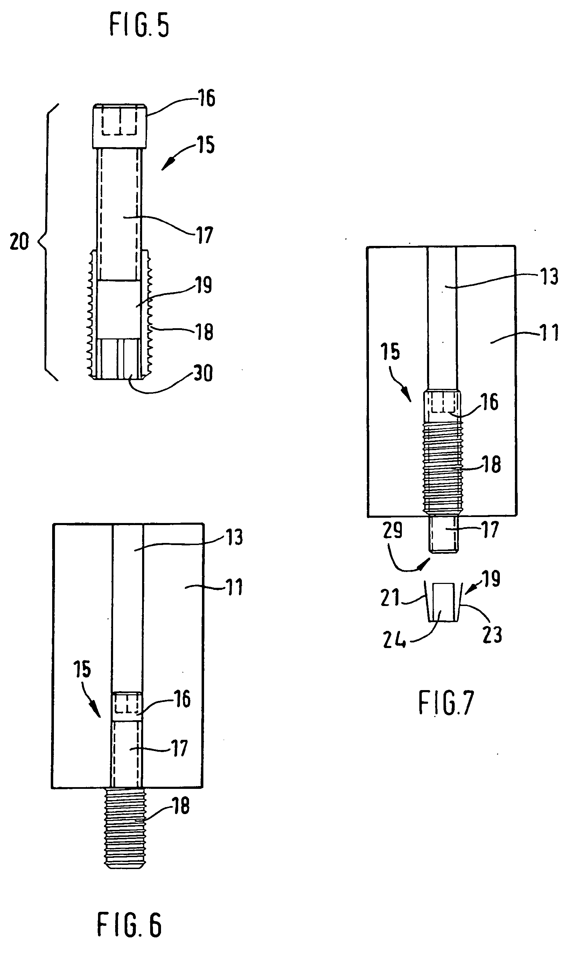

In Figur 3 ist das Klemmstück 19 aus Figur 2 in einem aufgefalteten Zustand in Draufsicht veranschaulicht. Das Klemmstück 19, das in der vorliegenden Ausführungsform einstückig aus Kunststoff aufgebildet, vorzugsweise ausgestanzt, sein kann umfasst vier Klemmlappen 21 bis 24, die über einen zentralen Verbindungsabschnitt 25 miteinander verbunden sind. Im zentralen Verbindungsabschnitt 25 kann eine zentrale Ausnehmung 28 angeordnet sein. Der verbleibende Bereich des zentralen Verbindungsabschnitts 25 dient als Aufstandsfläche für das stirnseitige Ende 29 des Schraubenschaftes 17. Das Klemmstück 19 weist vorzugsweise eine Stärke von etwa 0,4 mm auf. Wie in Figur 4 veranschaulicht, können die Klemmlappen 21 bis 24 gegeneinander gefaltet werden, so dass das stirnseitige Ende 29 sowie der daran anschließende Bereich des Schraubenschaftes 17 im Klemmstück 19 aufgenommen werden kann und das so gefaltete Klemmstück 19 zusammen mit dem stirnseitigen Ende 29 sowie eines sich anschließenden Abschnittes des Schraubenschaftes 17 in die Innenbohrung 27 der Gewindehülse 18 eingeführt werden kann, wie in der Schnittansicht nach Figur 5 veranschaulicht. Das Klemmstück ist hier in die Innenbohrung 27 der Gewindehülse 18 soweit eingeschoben, dass zumindest noch ein Werkzeugeingriff 30 der in der Innenbohrung 27 ausgebildet ist, zugänglich bleibt, um die aus Verbindungsschraube 15, Gewindehülse 18 und Klemmstück 19 gebildete Montageeinheit 20 in die Profilnut 13 eines Profilstabes 11 mit Hilfe eines Werkzeuges (nicht gezeigt) einzuschrauben.

Das Einführen der Montageeinheit 20 in die Profilnut 13 des Profilstabes 11 ist in Figur 6 veranschaulicht. Die Verbindungsschraube 15 steht hierbei mit mehr als der Hälfte der Länge ihres Schraubenschaftes 17 über die Gewindehülse 18 vor, so dass durch die Verbindungsschraube 15 eine äußerst wirksame Zentrier- und Einführhilfe gegeben ist. Die Gewindehülse 18 wird anschließend in einem Gewindedrückprozess unter Ausbildung eines durch Umformung entstehenden Gewindes in die Profilnut 13 des Profilstabes 11 eingeschraubt. Die Einschraubung der Gewindehülse 18 in einem Spanabhub vermeidenden Gewindedrückprozess wird zwar bevorzugt; es sind aber auch andere Verfahren bereits im Stand der Technik vorgeschlagen, um eine Gewindehülse 18 in einer Profilnut 13 eines Profilstabes 11 zu verankern. Selbstverständlich können für das Verbindersystem nach der vorliegenden Erfindung auch diese anderen bereits bekannten Verfahren sowie u.U. auch weitere noch nicht vorgeschlagene Verfahren zur Verankerung einer Gewindehülse 18 in einer Profilnut 13 eines Profilstabes 11 zur Anwendung kommen.

In Figur 7 ist schließlich schematisch die bereits in der Profilnut 13 verankerte Gewindehülse 18 veranschaulicht, wobei das Klemmstück 19 durch Beaufschlagung des Schraubenkopfes 16 der Verbindungsschraube 15 in axialer Richtung aus der Gewindehülse 18 herausgedrückt ist, so dass die Verbindungsschraube 15 nun rotatorisch gegenüber der Gewindehülse 18 frei beweglich ist und mit einem teil ihres Schraubenschaftes 17 über den Profilstab 11 vorsteht zum Eingriff in einen Nutenstein 26 in einer Profilnut 14 eines zweiten Profilstabes 12 (vgl. hierzu Figur 1).

### Bezugszeichenliste

- 11, 12: Profilstäbe
- 13, 14: Profilnut
- 15: Verbindungsschraube
- 16: Schraubenkopf
- 17: Schraubenschaft
- 18: Gewindehülse
- 19: Fixiermittel, Klemmstück
- 20: Montageeinheit
- 21 - 24: Klemmlappen
- 25: zentraler Verbindungsabschnitt
- 26: Nutenstein
- 27: Innenbohrung
- 28: zentrale Ausnehmung
- 29: stirnseitiges Ende (des Schraubenschaftes)
- 30: Werkzeugeingriff

## Patentansprüche

1. Verbindersystem ausgebildet und bestimmt für eine Profilverbindung umfassend zwei zu verbindende Profilstäbe (11, 12) aus Metall, insbesondere aus Aluminium, die jeweils mindestens eine längsverlaufende hinterschnittene Profilnut (13, 14) aufweisen,
wobei das Verbindersystem eine Verbindungsschraube (15) mit einem Schraubenkopf (16) und einem Schraubenschaft (17) sowie eine Gewindehülse (18) umfasst,
wobei die Verbindungsschraube (15) derart bemessen ist, dass sie die Gewindehülse (18) durchtritt und mit einem Teil ihres Schraubenschaftes (17) über diese zum Eingriff in ein Gegenlagerstück in der Profilnut (14) des zweiten Profilstabes (12) gebracht werden kann,
**dadurch gekennzeichnet,**
**dass** die Verbindungsschraube (15) über lösbare Fixiermittel (19) einbaufertig in der Gewindehülse (18) fixiert ist und so eine Montageeinheit (20) geschaffen ist derart, dass die Montageeinheit (20) als Ganzes in die Profilnut (13) des ersten Profilstabes (11) einschraubbar ist.

2. Verbindersystem nach Anspruch 1,
**dadurch gekennzeichnet,**
**dass** die Fixiermittel (19) ein Klemmstück, vorzugsweise aus Kunststoff umfassen.

3. Verbindersystem nach Anspruch 1,
**dadurch gekennzeichnet,**
**dass** die Fixiermittel (19) eine klebende und/oder aushärtende, fluide oder pastöse Substanz umfassen.

4. Verbindersystem nach einem der Ansprüche 1 bis 3,
**dadurch gekennzeichnet,**
**dass** die Fixiermittel (19) durch Beaufschlagung des Schraubenkopfes (16) der Verbindungsschraube (15) mit einer vorbestimmten Kraft lösbar sind.

5. Verbindersystem nach einem der Ansprüche 1 bis 4,
**dadurch gekennzeichnet,**
**dass** der Schraubenkopf (16) in seinem Durchmesser auf den Innendurchmesser der Profilnut (13) des Profilstabes (11) abgestimmt ist derart, dass die über die Fixiermittel (19) in der Gewindehülse (18) befestigte Verbindungsschraube (15) beim Einschrauben als Führungs- und/oder Zentrierelement dient.

6. Verbindersystem nach einem der Ansprüche 1 bis 5,
**dadurch gekennzeichnet,**
**dass** die Verbindungsschraube (15) in der Gewindehülse (18) über die Fixiermittel (19) so positioniert ist, dass sie in Einführrichtung in die Profilnut (13) nicht nur mit ihrem Schraubenkopf (16), sondern auch mit einem Teil ihres Schraubenschaftes (17) vorsteht.

7. Verbindersystem nach Anspruch 6,
**dadurch gekennzeichnet,**
**dass** die Verbindungsschraube (15) mindestens über die Hälfte der Länge ihres Schraubenschaftes (17) über die Gewindehülse (18) vorsteht.

8. Verbindersystem nach einem der Ansprüche 2 bis 7,
**dadurch gekennzeichnet,**
**dass** das Klemmstück (19) mehrere Klemmlappen (21 - 24) umfasst, die über einen zentralen Verbindungsabschnitt (25) miteinander verbunden sind.

9. Verbindersystem nach Anspruch 8,
**dadurch gekennzeichnet,**
**dass** die Klemmlappen (21 - 24) eine Stärke von 0,3 bis 0,5 mm, vorzugsweise von etwa 0,4 mm aufweisen.

10. Verbindersystem nach einem der Ansprüche 1 bis 9,
**dadurch gekennzeichnet,**
**dass** das Klemmstück einstückig ausgebildet ist.

## Claims

1. Connector system designed and intended for a profile connection comprising two profile rods (11, 12) made from metal, in particular from aluminium, to be connected, which have in each case at least one longitudinally extending undercut profile groove (13, 14), wherein the connector system comprises a connecting screw (15) having a screw head (16) and a screw shaft (17) as well as a threaded sleeve (18), wherein the connecting screw (15) has dimensions such that it passes through the threaded sleeve (18) and with a part of its screw shaft (17) may be engaged via the latter in a thrust-bearing piece in the profile groove (14) of the second profile rod (12), **characterised in that** the connecting screw (15) is fixed to be ready for installation in the threaded sleeve (18) via releasable fixing means (19) and hence an assembly unit (20) is provided such that the assembly unit (20) can be screwed as a whole into the profile groove (13) of the first profile rod (11).

2. Connector system according to claim 1, **characterised in that** the fixing means (19) comprise a clamping piece, preferably made from plastic.

3. Connector system according to claim 1, **characterised in that** the fixing means (19) comprise an adhesive and/or setting, fluid or pasty substance.

4. Connector system according to one of claims 1 to 3, **characterised in that** the fixing means (19) can be released by exposing the screw head (16) of the connecting screw (15) to a predetermined force.

5. Connector system according to one of claims 1 to 4, **characterised in that** the diameter of the screw head (16) is matched to the internal diameter of the profile groove (13) of the profile rod (11) such that the connecting screw (15) attached via the fixing means (19) in the threaded sleeve (18) serves as a guide and/or centring element when screwing-in.

6. Connector system according to one of claims 1 to 5, **characterised in that** the connecting screw (15) is positioned in the threaded sleeve (18) via the fixing means (19) so that it projects in introduction direction into the profile groove (13) not only with its screw head (16), but also with a part of its screw shaft (17).

7. Connector system according to claim 6, **characterised in that** the connecting screw (15) projects beyond the threaded sleeve (18) over at least half the length of its screw shaft (17).

8. Connector system according to one of claims 2 to 7, **characterised in that** the clamping piece (19) comprises several clamping flaps (21 - 24), which are connected to one another via a central connecting section (25).

9. Connector system according to claim 8, **characterised in that** the clamping flaps (21- 24) have a thickness of 0.3 to 0.5 mm, preferably of about 0.4 mm.

10. Connector system according to one of claims 1 to 9, **characterised in that** the clamping piece is designed in one piece.

## Revendications

1. Système de connexion réalisé et prévu pour une connexion de profilés comprenant deux tiges profilées à assembler (11,12) en métal, en particulier en aluminium, qui présentent chacune au moins une rainure de profilé (13, 14) s'étendant longitudinalement, contre-dépouillée, où le système de connexion comprend un boulon de connexion (15) avec une tête de boulon (16) et une tige de boulon (17) ainsi qu'une douille filetée (18), où le boulon de connexion (15) est dimensionné de façon à traverser la douille filetée (18) et peut être amenée avec une partie de son axe de boulon (17) par celui-ci en prise avec une contre-pièce de palier dans la rainure de profilé (14) de la seconde tige profilée (12), **caractérisé en ce que** le boulon de connexion (15) est fixé par des moyens de fixation relâchables (19), prêt à être monté, dans la douille filetée (18), et qu'ainsi une unité de montage (20) est créée de telle sorte que l'unité de montage (20), dans son ensemble, peut être vissée dans la rainure de profilé (13) de la première tige profilée (11).

2. Système de connexion selon la revendication 1, **caractérisé en ce que** les moyens de fixation (19) comprennent une pièce de serrage, de préférence en matériau synthétique.

3. Système de connexion selon la revendication 1, **caractérisé en ce que** les moyens de fixation (19) comprennent une substance collante et/ou durcissante, fluide ou pâteuse.

4. Système de connexion selon l'une des revendications 1 à 3, **caractérisé en ce que** les moyens de fixation (19) peuvent être relâchés avec une force prédéterminée en sollicitant la tête de boulon (16) du boulon de connexion (15).

5. Système de connexion selon l'une des revendications 1 à 4, **caractérisé en ce que** la tête de boulon (16), quant à son diamètre, est accordée au diamètre intérieur de la rainure (13) de la tige profilée (11) de telle sorte que le boulon de connexion (15) fixé par les moyens de fixation (19) dans la douille filetée (18), lors du vissage, sert d'élément de guidage et/ou de centrage.

6. Système de connexion selon l'une des revendications 1 à 5, **caractérisé en ce que** le boulon de connexion (15) est positionné dans la douille filetée (18) par les moyens de fixation (19) de façon qu'il dépasse dans la direction d'insertion dans la rainure de profilé (13) non seulement avec sa tête de boulon (16) mais aussi avec une partie de son axe de boulon (17).

7. Système de connexion selon la revendication 6, **caractérisé en ce que** le boulon de connexion (15) fait saillie au moins sur la moitié de la longueur de son axe de boulon (17) sur la douille filetée (18).

8. Système de connexion selon l'une des revendications 2 à 7, **caractérisé en ce que** la pièce de serrage (19) comprend plusieurs languettes de serrage (21 à 24) qui sont reliées entre elles par une section de connexion centrale (25).

9. Système de connexion selon la revendication 8, **caractérisé en ce que** les languettes de serrage (21 à 24) ont une épaisseur de 0,3 à 0,5 mm, de préférence d'environ 0,4 mm.

10. Système de connexion selon l'une des revendications 1 à 9, **caractérisé en ce que** la pièce de serrage est réalisée en une pièce.
